# EUROPÄISCHE PATENTSCHRIFT

(11) **EP 0 556 556 B1**
(45) Veröffentlichungstag und Bekanntmachung des Hinweises auf die Patenterteilung: **09.04.1997**
(21) Anmeldenummer: 93100450.1
(22) Anmeldetag: 14.01.1993
(51) Int. Cl.: C09B 44/06, C09B 29/15, C09B 29/20

(54) **Basische Azofarbstoffe mit einer Kupplungskomponente aus der Hydroxynaphthalincarbonsäurereihe**
Basic azo dyestuffs from coupling components of the hydroxynaphthalene carbonic acid series
Colorants azoiques basiques à partir de copulants de la série d'acide hydroxycarboxylique du naphthalène

(30) Priorität: 30.01.1992 DE 4202566
(43) Veröffentlichungstag der Anmeldung: 25.08.1993
(73) Patentinhaber: BASF Aktiengesellschaft, 67063 Ludwigshafen (DE)
(72) Erfinder: Hahn, Erwin, Dr., W-6900 Heidelberg (DE); Hengelsberg, Heidi, Dr., W-6800 Mannheim 1 (DE); Mayer, Udo, Dr., W-6710 Frankenthal (DE)

(56) Entgegenhaltungen:
- EP-A- 0 159 549
- EP-A- 0 281 920

## Beschreibung

Die vorliegende Erfindung betrifft neue basische Azofarbstoffe der Formel I 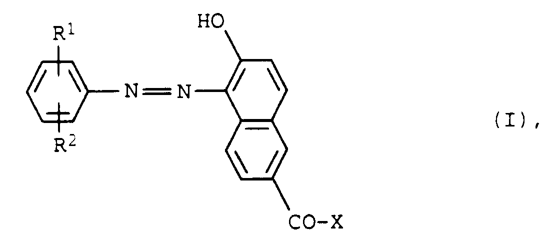 in der
- R¹: Wasserstoff, C₁-C₄-Alkyl, C₁-C₄-Alkoxy oder C₁-C₄-Alkanoylamino,
- R²: Wasserstoff, C₁-C₄-Alkyl oder C₁-C₄-Alkoxy oder einen Rest der Formel CO-X und
- X: Hydroxy, C₁-C₄-Alkoxy, Amino, C₁-C₆-Mono- oder Dialkylamino oder einen Rest der Formel 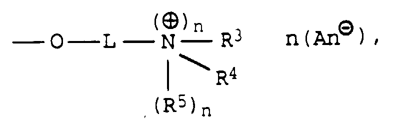 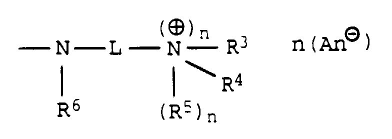 oder 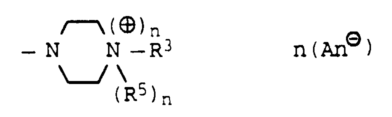 bedeuten, worin
n für 0 oder 1,
R³, R⁴ und R⁵ gleich oder verschieden sind und unabhängig voneinander jeweils für Wasserstoff oder gegebenenfalls durch Hydroxy substituiertes C₁-C₄-Alkyl,
R⁶ für Wasserstoff oder C₁-C₄-Alkyl,
L für C₂-C₆-Alkylen und
An^{⊖} für das Äquivalent eines Anions stehen,
mit der Maßgabe, daß mindestens ein basischer oder quartärer Rest im Molekül vorhanden ist, sowie ihre Verwendung zum Färben oder Bedrucken von polymerem Material.

Aufgabe der vorliegenden Erfindung war es, neue basische Azofarbstoffe mit einer Kupplungskomponente aus der Reihe der Hydroxynaphthalincarbonsäuren bereitzustellen. Die neuen Farbstoffe sollten sich in vorteilhafter Weise zum Färben oder Bedrucken von polymerem Material, insbesondere von Papier eignen. Die erzielten Färbungen sollten gute Gebrauchseigenschaften aufweisen.

Demgemäß wurden die eingangs näher bezeichneten basischen Azofarbstoffe der Formel I gefunden.

Alle in den obengenannten Formeln auftretenden Alkyl- und Alkylengruppen können sowohl geradkettig als auch verzweigt sein.

Reste R¹, R², R³, R⁴, R⁵ und R⁶ sind z.B. Methyl, Ethyl, Propyl, Isopropyl, Butyl, Isobutyl oder sec-Butyl.

Reste R¹ und R² sind weiterhin, wie auch Reste X, z.B. Methoxy, Ethoxy, Propoxy, Isopropoxy, Butoxy, Isobutoxy oder sec-Butoxy.

Reste R¹ sind weiterhin z.B. Formylamino, Acetylamino, Propionylamino oder Butyrylamino.

Reste R³, R⁴ und R⁵ sind weiterhin z.B. 2-Hydroxyethyl, 2- oder 3-Hydroxypropyl oder 2- oder 4-Hydroxybutyl.

Reste L sind z.B. -(CH₂)₂-, -(CH₂)₃-, -(CH₂)₄-, -(CH₂)₅-, -(CH₂)₆-, -CH(CH₃)-CH₂- oder -CH(CH₃)-CH(CH₃)-.

Reste X sind weiterhin z.B. Mono- oder Dimethylamino, Mono- oder Diethylamino, Mono- oder Dipropylamino, Mono- oder Diisopropylamino, Mono- oder Dibutylamino, Mono- oder Dipentylamino, Mono- oder Dihexylamino oder N-Methyl-N-butylamino.

Geeignete Anionen An^{⊖} sind z.B. Fluorid, Chlorid, Bromid, Iodid, Formiat, Acetat, Propionat, Mono-, Di- oder Trichloracetat, Lactat, Methoxyacetat, Citrat, Succinat, Methansulfonat, Benzolsulfonat oder 2- oder 4-Methylbenzolsulfonat.

Unter einem basischen oder quartären Rest ist im erfindungsgemäßen Sinn ein Rest der Formel CO-X zu verstehen, worin X einen Rest der Formel 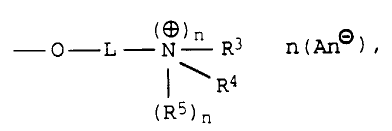 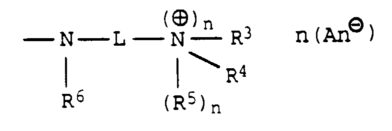 oder 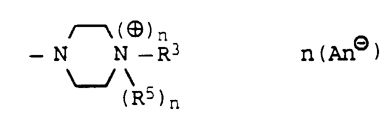 bedeutet, wobei n, L, R³, R⁴, R⁵, R⁶ und An^{⊖} jeweils die obengenannte Bedeutung besitzen.

Bevorzugt sind basische Farbstoffe der Formel I, in der R² einen Rest der Formel CO-X bedeutet, worin X die obengenannte Bedeutung besitzt.

Besonders bevorzugt sind basische Farbstoffe der Formel I, in der R² einen Rest der Formel CO-X bedeutet, worin X für einen basischen oder quartären Rest steht.

Besonders bevorzugt sind weiterhin basische Azofarbstoffe der Formel I, in der R² in ortho-Position zur Azobrücke steht.

Besonders bevorzugt sind weiterhin basische Azofarbstoffe der Formel I, in der R¹ Wasserstoff bedeutet.

Die neuen basischen Azofarbstoffe der Formel I können nach an sich bekannten Methoden erhalten werden.

Beispielsweise kann ein Anilin der Formel II 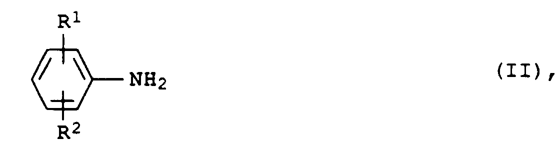 in der R¹ und R² jeweils die obengenannte Bedeutung besitzen, auf an sich bekanntem Weg diazotiert und mit einem Naphthalinderivat der Formel III 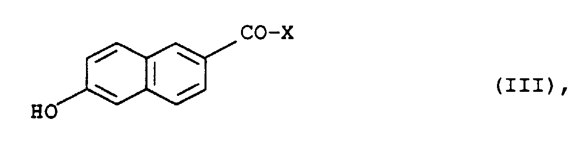 in der X die obengenannte Bedeutung besitzt, gekuppelt werden.

Diejenigen Farbstoffe der Formel I, die über einen quartären Rest (n=1) verfügen, werden zweckmäßig so erhalten, daß man zunächst den neutralen Azofarbstoff herstellt und diesen dann anschließend mit einem C₂-C₄-Alkylenoxid oder mit einer Verbindung der Formel IV

R⁵-Y (IV),

in der R⁵ gegebenenfalls durch Hydroxy substituiertes C₁-C₄-Alkyl und Y eine Austrittsgruppe, z.B. Chlorid, Bromid, Iodid, Methosulfat, Ethosulfat, Benzolsulfonat oder 2- oder 4-Methylbenzolsulfonat, bedeuten, quaterniert.

Die erfindungsgemäßen basischen Azofarbstoffe der Formel I können für sich alleine, in Gemischen untereinander und zusammen mit anderen kationischen oder anionischen Verbindungen in Form ihrer Lösungen oder in Form von Pulvern oder Granulaten angewendet werden. Sie eignen sich vorteilhaft zum Färben oder Bedrucken von polymerem Material, insbesondere von Papierstoffen, aber auch von Cellulose, Baumwolle, Leder, Bastfasern, Hanf, Flachs, Sisal, Jute, Kokos oder Stroh.

Die Farbstoffe können vorzugsweise bei der Herstellung von in der Masse gefärbtem, geleimtem und ungeleimtem Papier verwendet werden. Sie können ebenfalls zum Färben von Papier nach dem Tauchverfahren angewendet werden.

Das Färben von Papier, Leder oder Cellulose erfolgt nach an sich bekannten Methoden.

Die neuen Farbstoffe oder ihre Präparationen färben das Abwasser bei der Papierherstellung praktisch gar nicht oder nur wenig an, was für die Reinhaltung der Gewässer besonders günstig ist. Sie sind hoch substantiv, melieren nicht, wenn sie auf Papier gefärbt sind und sind weitgehend pH-unempfindlich. Die Färbungen auf Papier zeichnen sich durch eine gute Lichtechtheit aus. Nach längerem Belichten ändert sich die Nuance Ton-in-Ton.

Die gefärbten Papiere, die eine gute Bleichbarkeit aufweisen, sind naßecht, nicht nur gegen Wasser, sondern ebenfalls gegen Milch, Seifenwasser, Natriumchloridlösungen, Fruchtsäfte oder gesüßte Mineralwasser und wegen ihrer guten Alkoholechtheit auch gegen alkoholische Getränke beständig.

Mit den neuen Farbstoffen kann man auch Polyacrylnitriltextilien oder durch anionische Gruppen modifizierte Polyamid-oder Polyestertextilien färben, foulardieren oder drucken.

Die folgenden Beispiele sollen die Erfindung näher erläutern. Die dort angegebenen Prozente sind Gewichtsprozente.

### Beispiel 1

109,4 g einer 58,9 %igen wäßrigen Lösung von Anthranilsäure[2-(dimethylamino)ethyl]ester wurden in einem Gemisch aus 127 g 30 %iger Salzsäure und 101,6 g Eisessig bei 10 bis 15°C gelöst und anschließend tropfenweise mit 69,1 g 32 %iger wäßriger Natriumnitrit-Lösung versetzt. Nach etwa 1 Stunde zerstörte man überschüssiges Nitrit durch Zugabe von Amidosulfonsäure. Die Diazoniumchloridlösung wurde alsdann abwechselnd portionsweise mit 197,6 g 30 %iger wäßriger Natriumacetatlösung und 61,6 g 2-Hydroxy-6-naphthoesäuremethylester versetzt, wobei die Temperatur bis 30°C anstieg. Nach beendeter Zugabe wurde das Reaktionsgemisch auf einen pH-Wert von 7 eingestellt, der erhaltene Niederschlag abfiltriert, mit Wasser gewaschen und getrocknet. Man erhielt 106,7 g eines orangen Pulvers der Formel 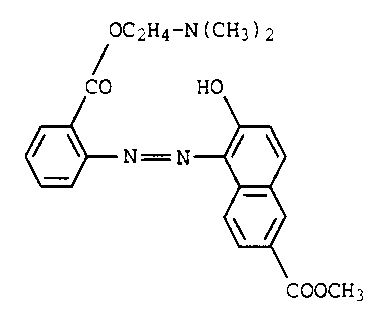 (Fp.: 149 - 158°C, λₘₐₓ (Essigsäure): 310,1, 482,1 nm).

Der Farbstoff läßt sich mit Eisessig und Wasser in eine stabile 26 %ige Flüssigeinstellung überführen. Er färbt Papierstoff brillant gelbstichig orange. Das Abwasser ist praktisch farblos. Die Bleichbarkeit mit Natriumdithionit ist sehr gut.

### Beispiel 2

7,1 g einer 58,9 %igen wäßrigen Lösung von Anthranilsäure-[2-(dimethylamino)ethyl]ester wurden analog Beispiel 1 diazotiert. Anschließend versetzte man die Reaktionslösung abwechselnd portionsweise mit 12,8 g 30 %iger wäßriger Natriumacetatlösung und 5,2 g 2-Hydroxy-6-naphtoesäure[2-(dimethylamino)ethyl]amid. Nach beendeter Zugabe rühre man 1 Stunde bei Raumtemperatur und weitere 2 Stunden bei 40°C nach. Die Reaktionslösung, die den Farbstoff der Formel 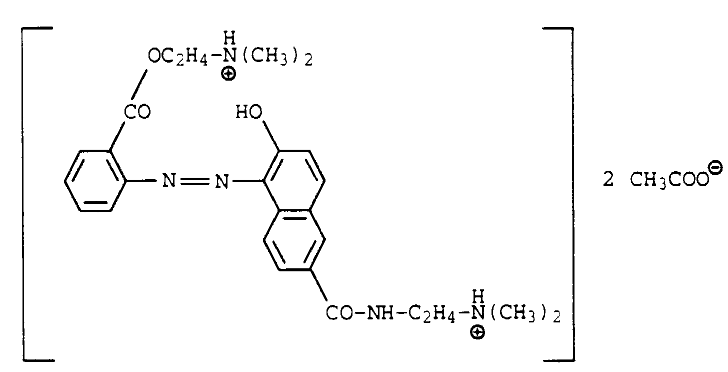 enthielt, wurde dann filtriert und direkt für Papierfärbungen verwendet (λₘₐₓ (Essigsäure): 309,1, 482,1 nm). Sie färbt Papierstoff gelbstichig orange. Das Abwasser ist nur schwach gefärbt. Mit Natriumdithionit kann das mit diesem Farbstoff gefärbte Papier praktisch vollständig entfärbt werden.

In analoger Weise werden die in den folgenden Tabellen 1 und 2 aufgeführten Farbstoffe erhalten.

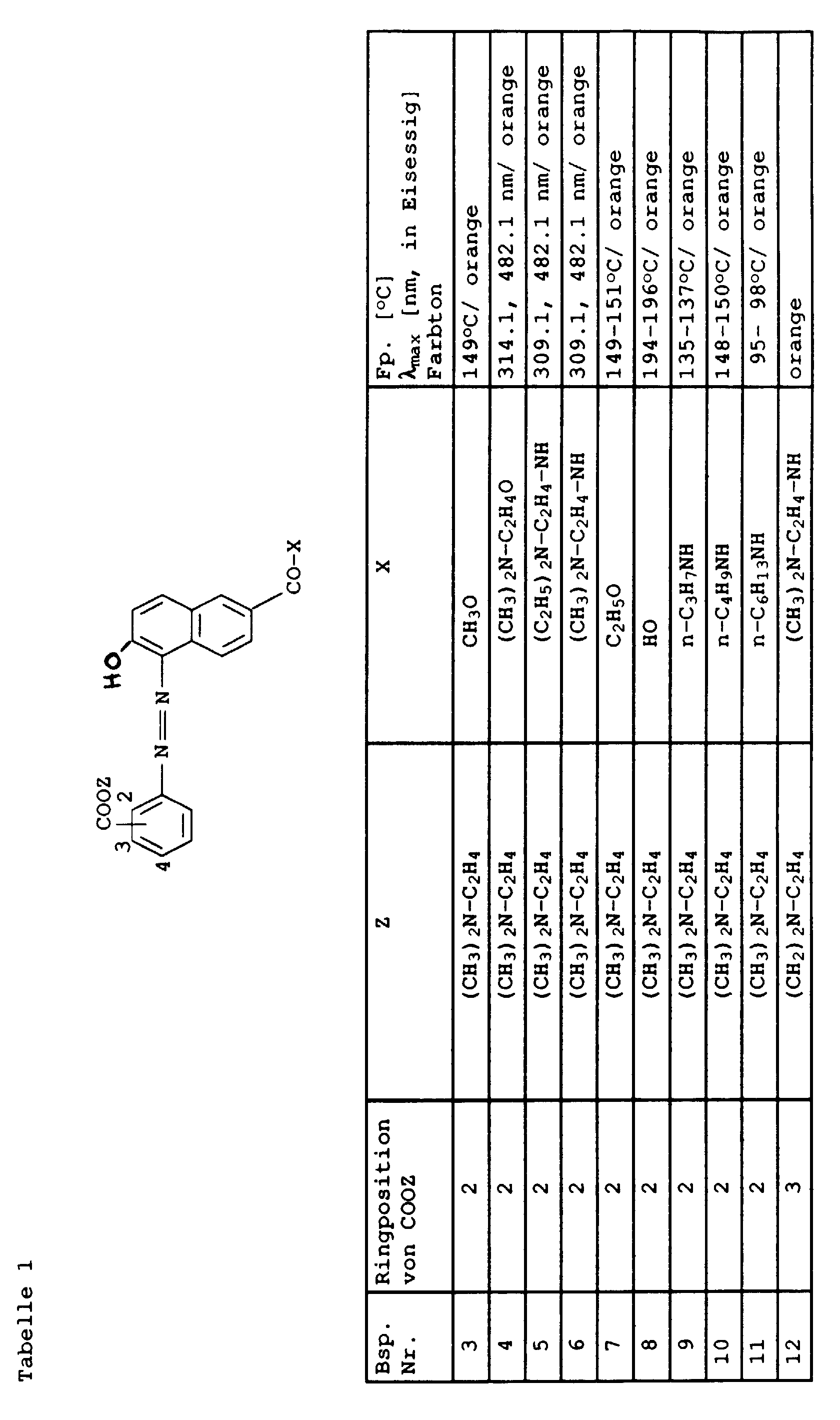

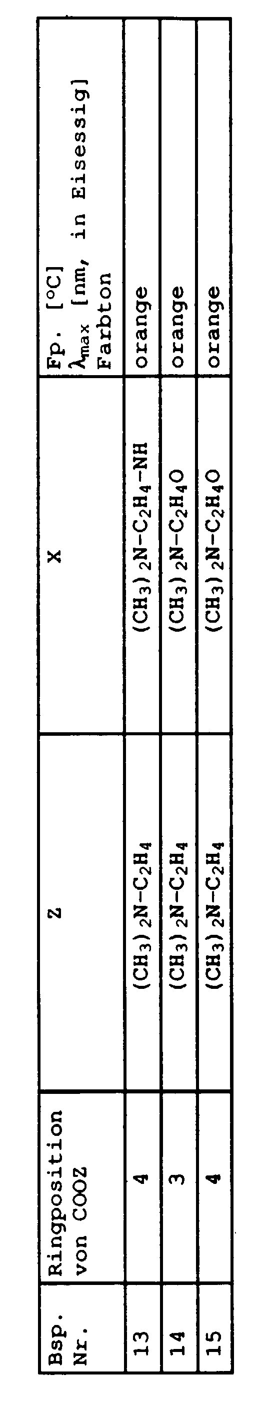

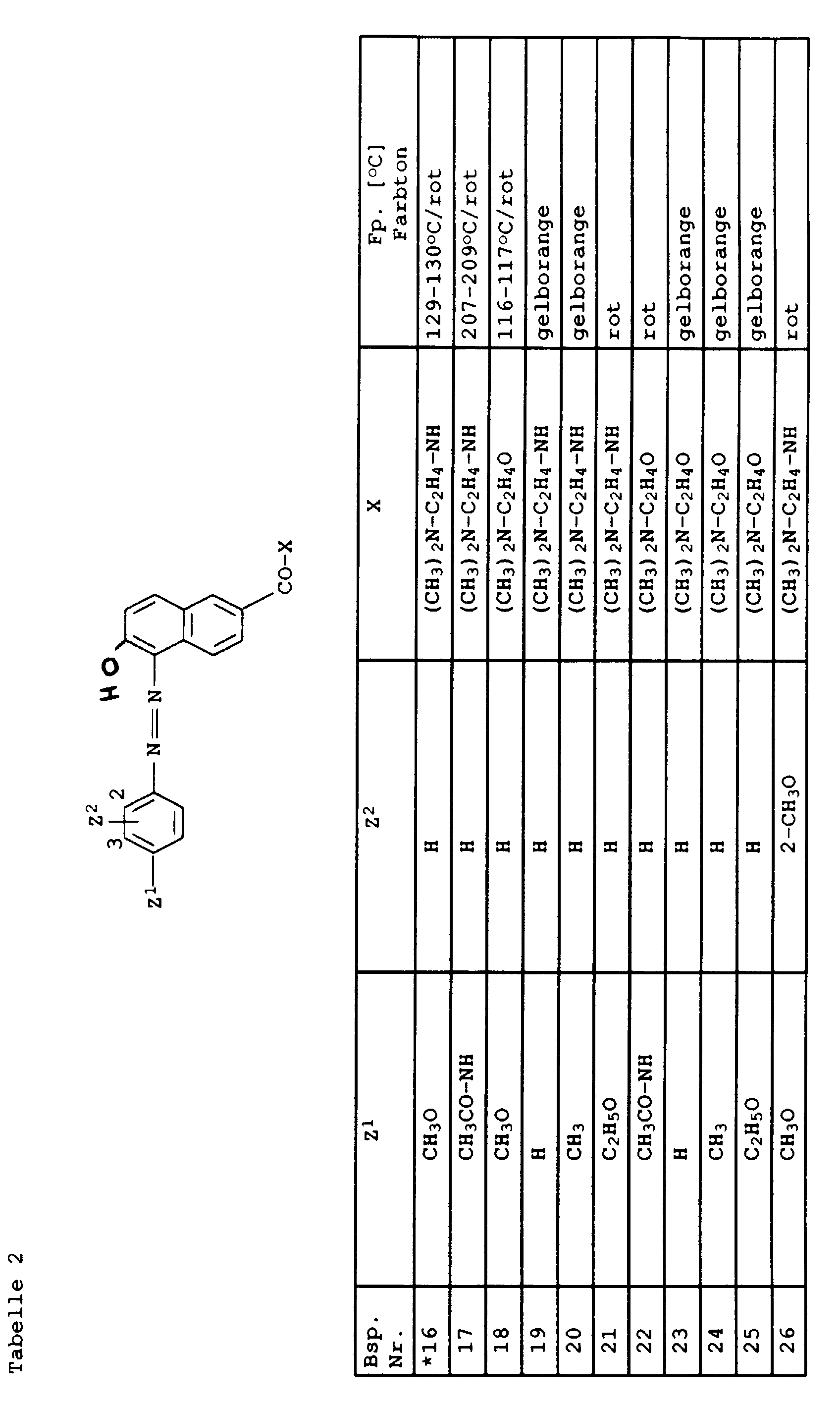

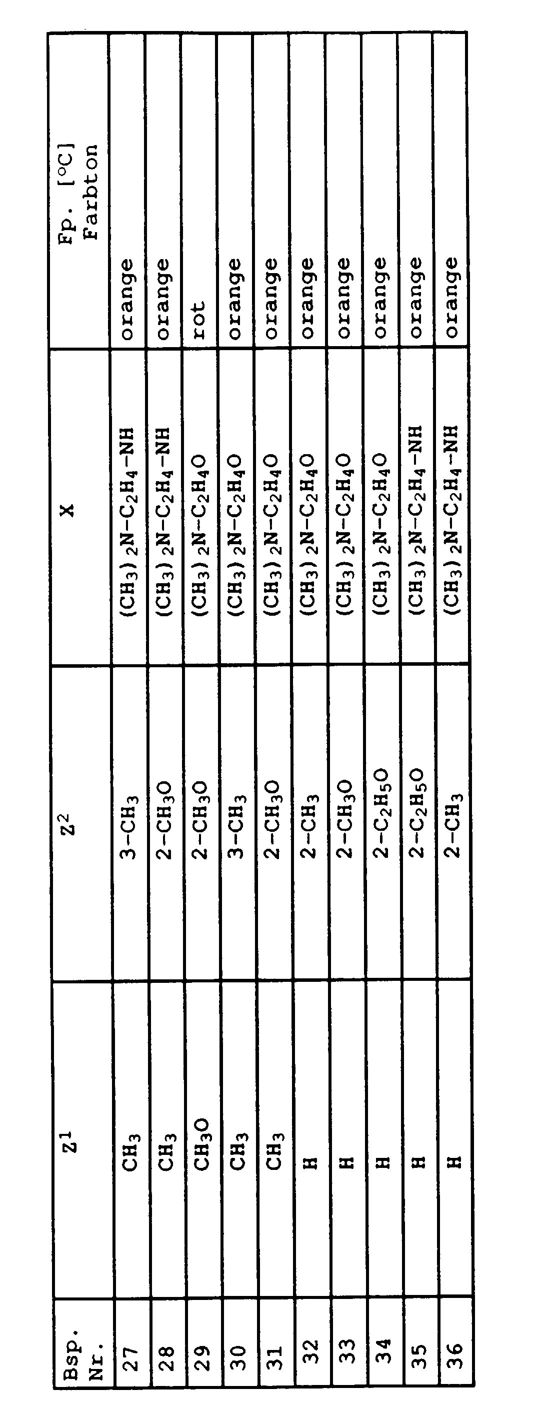

### Beispiel 37 (Anwendung)

Zu einer auf einen Mahlgrad von 30° SR gemahlenen, wäßrigen Stoffsuspension aus 70 g gebleichtem Kiefersulfatzellstoff und 30 g gebleichtem Birkensulfatzellstoff wurden bei einer Stoffdichte von 2,5 % 0,8 g (bezogen auf Trockenstoff) des Farbstoffs aus Beispiel 1 in Form einer 0,5 %igen essigsauren wäßrigen Lösung zugesetzt und 15 Minuten homogen gerührt. Anschließend wurde mit Trinkwasser auf eine Stoffdichte von 0,2 % verdünnt und in üblicher Weise über einen Blattbildner ein Papierblatt gebildet. Das Abwasser war praktisch farblos. Das erhaltene Papierblatt weist eine brillante gelbstichig orange Nuance auf und ist mit Natriumdithionit sehr gut bleichbar.

### Beispiel 38 (Anwendung)

Man verfuhr zunächst analog Beispiel 33, setzte allerdings 10 Minuten nach Zugabe der essigsauren wäßrigen Lösung des Farbstoffs aus Beispiel 1 % Harzleim und 3 % Alaun zu. Anschließend wurde die Stoffsuspension weitere 5 Minuten gerührt und dann mit (mittels Schwefelsäure auf einen pH-Wert von 5 eingestelltem) Wasser auf eine Stoffdichte von 0,2 % verdünnt. In bekannter Weise stellte man dann daraus Papierblätter her. Diese haben einen brillianten gelbstichig orangen Farbton und sind mit Natriumdithionit sehr gut bleichbar. Das Abwasser war nahezu farblos.

### Beispiel 39 (Anwendung)

70 g Holzschliff und 30 g halbgebleichter Sulfatzellstoff wurden, wie in Beispiel 34 beschrieben, mit einer essigsauren wäßrigen Lösung des Farbstoffs aus Beispiel 1 gefärbt. Die erhaltenen Papierblätter besitzen einen brillanten gelbstichig orangen Farbton und sind mit Natriumdithionit sehr gut bleichbar. Das Abwasser war praktisch farblos.

### Beispiel 40 (Anwendung)

70 g Holzschliff und 30 g halbgebleichter Sulfatzellstoff werden mit 20 % Kaolin (bezogen auf Holzschliff und Sulfatzellstoff) versetzt, analog Beispiel 38 mit einer essigsauren Lösung des Farbstoffs aus Beispiel 1 gefärbt und anschließend geleimt. Papier, das aus diesem Material auf übliche Weise hergestellt wurde, zeigt eine brillante gelbstichig orange Nuance und kann mit Natriumdithionit praktisch vollständig entfärbt werden. Das Abwasser war farblos.

## Patentansprüche

1. Basische Azofarbstoffe der Formel I 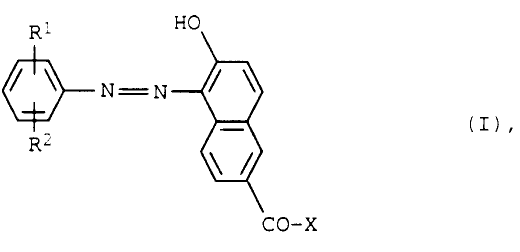 in der
R¹ Wasserstoff, C₁-C₄-Alkyl, C₁-C₄-Alkoxy oder C₁-C₄-Alkanoylamino
R² Wasserstoff, C₁-C₄-Alkyl oder C₁-C₄-Alkoxy oder einen Rest der Formel CO-X und
X Hydroxy, C₁-C₄-Alkoxy, Amino, C₁-C₆-Mono- oder Dialkylamino oder einen Rest der Formel 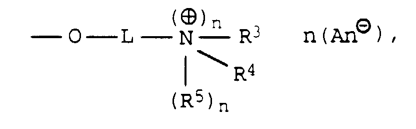 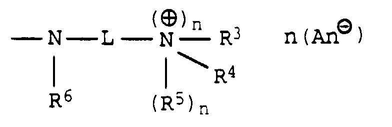 oder 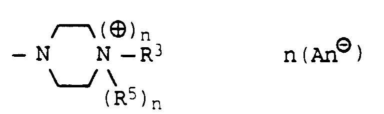 bedeuten, worin
n für 0 oder 1,
R³, R⁴ und R⁵ gleich oder verschieden sind und unabhängig voneinander jeweils für Wasserstoff oder gegebenenfalls durch Hydroxy substituiertes C₁-C₄-Alkyl,
R⁶ für Wasserstoff oder C₁-C₄-Alkyl,
L für C₂-C₆-Alkylen und
An^{⊖} für das Äquivalent eines Anions stehen,
mit der Maßgabe, daß mindestens ein basischer oder quartärer Rest im Molekül vorhanden ist.

2. Basische Farbstoffe nach Anspruch 1, dadurch gekennzeichnet, daß R² einen Rest der Formel CO-X bedeutet, worin X die in Anspruch 1 genannte Bedeutung besitzt.

3. Basische Farbstoffe nach Anspruch 1, dadurch gekennzeichnet, daß R² einen Rest der Formel CO-X bedeutet, worin X für einen basischen oder quartären Rest steht.

4. Basische Farbstoffe nach Anspruch 1, dadurch gekennzeichnet, daß R² in ortho-Position zur Azobrücke steht.

5. Verwendung der basischen Farbstoffe gemäß Anspruch 1 zum Färben oder Bedrucken von polymerem Material.

## Claims

1. Basic azo dyes of the formula I 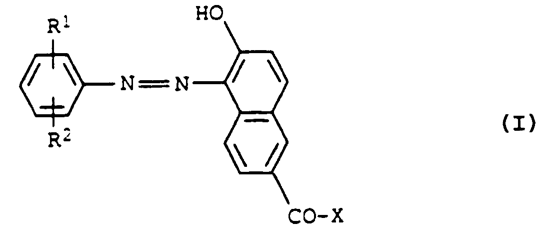 where
R¹ is hydrogen, C₁-C₄-alkyl, C₁-C₄-alkoxy or C₁-C₄-alkanoylamino,
R² is hydrogen, C₁-C₄-alkyl, C₁-C₄-alkoxy or a radical of the formula CO-X, and
X is hydroxyl, C₁-C₄-alkoxy, amino, mono- or di(C₁-C₆-alkyl)amino or a radical of the formula 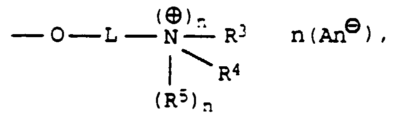 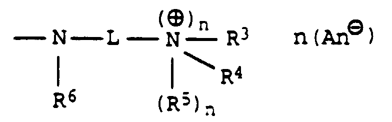 or 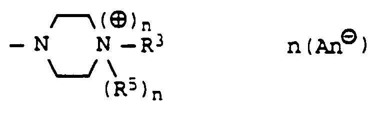 where
n is 0 or 1,
R³, R⁴ and R⁵ are identical or different and each is independently of the others hydrogen or unsubstituted or hydroxyl-substituted C₁-C₄-alkyl,
R⁶ is hydrogen or C₁-C₄-alkyl,
L is C₂-C₆-alkylene, and
An^{⊖} is one equivalent of an anion,
with the proviso that at least one basic or quaternary radical is present in the molecule.

2. Basic dyes as claimed in claim 1 wherein R² is a radical of the formula CO-X where X is as defined in claim 1.

3. Basic dyes as claimed in claim 1 wherein R² is a radical of the formula CO-X where X is a basic or quaternary radical.

4. Basic dyes as claimed in claim 1 wherein R² is ortho to the azo bridge.

5. The use of the basic dyes of claim 1 for dyeing or printing polymeric material.

## Revendications

1. Colorants azoïques basiques de formule I 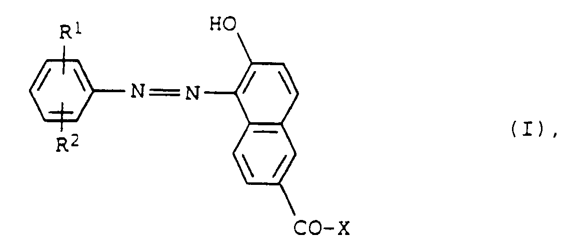 dans laquelle
R¹ représente un atome d'hydrogène ou un reste alkyle en C₁-C₄, alcoxy en C₁-C₄ ou alcanoylamino en C₁-C₄,
R² représente un atome d'hydrogène, un reste alkyle en C₁-C₄, alcoxy en C₁-C₄ ou un reste de formule CO-X et
X représente un reste hydroxy, alcoxy en C₁-C₄, amino, mono- ou dialkylamino en C₁-C₆ ou un reste de formule 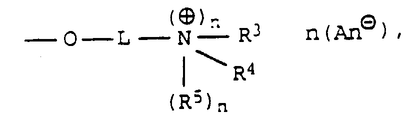 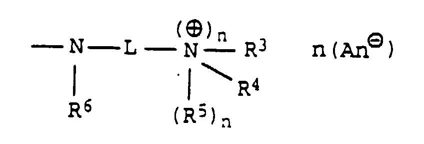 ou 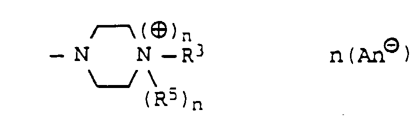 où
n est mis pour 0 ou 1,
R³, R⁴ et R⁵ sont identiques ou différents et sont mis chacun, indépendamment les uns des autres, pour un atome d'hydrogène ou pour un reste alkyle en C₁-C₄ éventuellement substitué par un groupement hydroxy,
R⁶ est mis pour un atome d'hydrogène ou pour un reste alkyle en C₁-C₄,
L est mis pour un reste alkylène en C₂-C₆ et
An^{⊖} est mis pour l'équivalent d'un anion,
étant spécifié qu'au moins un reste basique ou quaternaire est présent dans la molécule.

2. Colorants basiques selon la revendication 1, caractérisés en ce que R² représente un reste de formule CO-X dans laquelle X a la signification donnée dans la revendication 1.

3. Colorants basiques selon la revendication 1, caractérisés en ce que R² représente un reste de formule CO-X dans laquelle X est mis pour un reste basique ou quaternaire.

4. Colorants basiques selon la revendication 1, caractérisés en ce que R² est en position ortho par rapport au pont azo.

5. Utilisation des colorants basiques selon la revendication 1 pour la teinture ou l'impression de matières polymères.
